**Europäisches Patentamt**

**European Patent Office**

**Office européen des brevets**

(11) Numéro de publication : **0 243 253 B1**

(12)

# FASCICULE DE BREVET EUROPEEN

(45) Date de publication du fascicule du brevet :
**10.07.91 Bulletin 91/28**

(51) Int. Cl.$^5$ : **G06K 9/48**

(21) Numéro de dépôt : **87400881.6**

(22) Date de dépôt : **16.04.87**

(54) **Procédé de reconnaissance automatique d'objets susceptibles de se chevaucher.**

(30) Priorité : **18.04.86 FR 8605594**

(43) Date de publication de la demande :
**28.10.87 Bulletin 87/44**

(45) Mention de la délivrance du brevet :
**10.07.91 Bulletin 91/28**

(84) Etats contractants désignés :
**BE DE ES GB NL**

(56) Documents cités :
**EP-A- 0 115 462**
**US-A- 3 638 188**
**PROCEEDINGS OF SPIE - THE INTERNATIO-
NAL SOCIETY FOR OPTICAL ENGINEERING,
INTELLIGENT ROBOTS: THIRD INTERNATIO-
NAL CONFERENCE ON ROBOT VISION AND
SENSORY CONTROLS RoViSeC3, Cambridge,
Massachusetts, 7-10 novembre 1983, vol. 449,
partie 2, pages 676-684, SPIE - The International Society for Optical Engineering, Bellingham, Washington, US; J. SEGEN:
"Locating randomly oriented objects from
partial view"**

(56) Documents cités :
**IEEE PROCEEDINGS OF THE INTERNATIO-
NAL JOINT CONFERENCE ON PATTERN
RECOGNITION, Coronado, California, 8-11
novembre 1976, pages 739-744, IEEE, Computer Society, Long Beach, US; W.A. PERKINS:
"Multilevel vision recognition system"
INTERNATIONAL JOURNAL OF ROBOTICS
RESEARCH, vol. 1, no. 3, 1982, pages 57-82,
Cambridge, Massachusetts, US; R.C. BOLLES
et al.: "Recognizing and locating partially visible objects: The local-feature-focus method"**

(73) Titulaire : **COMMISSARIAT A L'ENERGIE
ATOMIQUE Etablissement de Caractère
Scientifique Technique et Industriel
31/33, rue de la Fédération
F-75015 Paris (FR)**

(72) Inventeur : **Juvin, Didier
14, Boulevard Edgar Quinet
F-75014 Paris (FR)**
Inventeur : **Tan, Shenbiao
Résidence les Millepertuis - Bât.01
F-91940 Les Ulis (FR)**

(74) Mandataire : **Mongrédien, André et al
c/o BREVATOME 25, rue de Ponthieu
F-75008 Paris (FR)**

EP 0 243 253 B1

## Description

La présente invention concerne un procédé de reconnaissance automatique d'objets susceptibles de se chevaucher. Elle s'applique aux machines de vision et plus particulièrement à la robotique, domaine dans lequel les études s'orientent actuellement vers les robots dits "intelligents", pouvant interpréter des données issues du milieu extérieur.

La reconnaissance d'objets partiellement cachés, par exemple par suite d'un chevauchement partiel de ces différents objets, est un atout très important pour la prochaine génération de machines de vision.

Différents procédés de reconnaissance d'objets susceptibles de se chevaucher sont connus dans l'état de la technique. L'un de ces procédés consiste à segmenter la ligne de contour de l'image de chaque objet à reconnaître, et à définir dans la segmentation de chaque contour, des segments caractéristiques définis par leur longueur et leur orientation, au cours d'une période d'apprentissage. Ce procédé connu consiste ensuite, au cours d'une période de reconnaissance, à comparer respectivement les segments caractéristiques de contours d'objets à reconnaître, avec des segments caractéristiques de contours de référence de ces objets. Ce procédé connu est décrit dans le document EP-A-0 115 462. Il fait notamment intervenir, au cours de la phase de comparaison, une détermination de gros segments inscriptibles dans des rectangles ayant des dimensions limites prédéterminées, nécessitant la mise en oeuvre de calculs longs et en partant d'un grand nombre d'hypothèses et de critères.

L'invention a pour but de remédier aux inconvénients de ce type de procédé et notamment de permettre une reconnaissance automatique et rapide d'objets susceptibles de se chevaucher, sans qu'il soit nécessaire d'émettre, lors de cette reconnaissance, un très grand nombre d'hypothèses et de critères de vérification de ces hypothèses. Ces buts sont atteints notamment en utilisant une segmentation particulière des contours des images des objets de référence et des images de l'objet à reconnaître, et grâce au choix hiérarchisé de couples de segments caractéristiques, permettant de définir des "vecteurs de transition" à partir desquels les hypothèses et les critères de reconnaissance sont développés.

L'invention vise un procédé de reconnaissance automatique d'objets susceptibles de se chevaucher, à partir des images respectives de référence de ces objets et de l'image de l'ensemble des objets à reconnaître, ces images étant mémorisées sous forme de valeurs numériques représentant pour chaque image les coordonnées des points d'une ligne de contour de cette image, dans un repère de référence, ce procédé consistant à coder, pour chaque image, des segments élémentaires successifs dont les extrémités sont sensiblement situées sur la ligne de contour correspondante, ce codage donnant pour chaque segment, la longueur de ce segment, ainsi que son angle par rapport à une direction de référence, cette opération de codage étant effectuée aussi bien dans une phase "d'apprentissage" des différents objets à reconnaître ultérieurement, que dans une phase subséquente de "reconnaissance" des objets susceptibles de se chevaucher, ce procédé consistant, dans la phase d'apprentissage :

– à rechercher pour chaque contour d'image de référence, des couples de segments caractéristiques successifs ou non de ce parcours, formés chacun d'un ou plusieurs segments élémentaires $(S_e)$, ces segments caractéristiques étant orientés dans un sens prédéterminé de parcours du contour, chaque couple déterminant un vecteur de transition caractéristique défini par des paramètres qui sont la valeur de l'angle $(a_d)$, orienté dans le sens du parcours, entre les deux segments caractéristiques orientés du couple, les coordonnées $(P(x, y))$ de l'origine et la longueur de chaque segment $(L_1, L_8)$ caractéristique du couple, un vecteur de transition étant caractéristique lorsque ses paramètres procurent un pouvoir de discrimination du contour de l'objet correspondant, même en cas de chevauchement de cet objet par un ou plusieurs autres objets, les paramètres des vecteurs de transition étant mémorisés,

– à effectuer les mêmes opérations de détermination des vecteurs de transition dans les segments caractéristiques du contour de l'image des objets à reconnaître,

– à comparer les valeurs des paramètres des vecteurs de transition du contour de l'image des objets à reconnaître et du contour des images de référence de chaque objet, de manière à rechercher des similarités de valeurs de ces paramètres, caractérisé en ce qu'il consiste en outre :

– à hiérarchiser les vecteurs de transition d'un contour en fonction de leur pouvoir de discrimination pour l'image des objets à reconnaître et pour les images de référence,

– à modifier cette hiérarchisation des vecteurs de transition au fur et à mesure de l'acquisition des vecteurs de transition des contours des différents objets, de manière à éliminer les vecteurs de transition semblables pour les différents contours, ce procédé consistant ensuite, dans la phase de reconnaissance :

      – à faire une hypothèse de présence d'un objet correspondant à un vecteur de transition pour lequel la comparaison a établi une similarité,

      – à établir une vérification fine de cette hypothèse en comparant les segments élémentaires $(S_e)$ successifs du contour de l'image de référence de cet objet avec les segments élémentaires successifs du contour de l'image des objets à reconnaître.

Selon une autre caractéristique, les segments élémentaires successifs codés sont obtenus par un codage de Freeman permettant d'obtenir des segments successifs définis par leurs orientation et dont les extrémités sont sensiblement situées sur la ligne de contour de chaque image, ce codage de Freeman étant suivi d'un traitement correctif permettant de déduire à partir de chaque segment codé selon Freeman, un ou plusieurs segments élémentaires successifs dont les extrémités sont situées sur la ligne de contour de l'image, ces segments élémentaires successifs étant de longueurs égales et permettant un codage isotrope.

Selon une autre caractéristique, le traitement correctif consiste pour chaque segment codé selon Freeman, à différentier ce segment par rapport à son numéro d'ordre dans le contour afin de compenser les irrégularités d'orientation, à effectuer une conversion des valeurs résultant de la différentiation de chaque segment afin de compenser les irrégularités de longueur, à filtrer le signal résultant de cette conversion, à échantillonner ce signal à fréquence constante, puis à intégrer le signal échantillonné, cette intégration produisant lesdits segments élémentaires successifs codés.

Ledit traitement correctif permet par ailleurs d'extraire les points anguleux, donc facilite l'extraction des segments caractéristiques.

Par ailleurs, ladite conversion peut être soit une conversion numérique-analogique permettant un échantillonnage sur le signal analogique, soit une conversion numérique-numérique.

Les caractéristiques et avantages de l'invention ressortiront mieux de la description qui va suivre, donnée en référence aux dessins annexés dans lesquels:

– la figure 1 représente schématiquement des segments caractéristiques d'une ligne de contour L,

– la figure 2 représente schématiquement, la segmentation d'une ligne de contour selon un code de Freeman,

– la figure 3 représente des vecteurs de Freeman, utilisés pour coder une ligne de contour,

– la figure 4 représente schématiquement en (a) une ligne de contour segmentée selon un code de Freeman, et en (b), la même ligne de contour segmentée à la suite d'un traitement effectué sur les segments de Freeman,

– la figure 5 représente schématiquement l'étape de dérivation intervenant dans le procédé de l'invention,

– la figure 6 représente les segments caractéristiques, selon l'invention, de la ligne de contour d'un objet,

– la figure 7 permet de mieux comprendre la notion de vecteur de transition entre deux vecteurs caractéristiques,

– la figure 8 représente schématiquement certains segments caractéristiques dans le contour de l'image de plusieurs objets se chevauchant,

– la figure 9 représente schématiquement un système permettant de mettre en oeuvre le procédé de l'invention.

Le procédé de reconnaissance automatique d'objets susceptibles de se chevaucher, selon l'invention, utilise tout d'abord un codage particulier des contours des images respectives de référence de ces objets pris individuellement, au cours d'une période d'apprentissage de chaque objet ; ce codage particulier est aussi utilisé pour l'image de l'ensemble des objets à reconnaître au cours d'une période de reconnaissance, les objets étant susceptibles de se chevaucher de sorte qu'un ou plusieurs objets sont partiellement cachés par des objets environnants.

Les images de référence ainsi que l'image globale des objets à reconnaître sont mémorisées sous forme de valeurs numériques représentant, pour chacune de ces images, les coordonnées des points d'une ligne de contour de cette image, dans un repère de référence. Ces images sont fournies par exemple par des moyens opto-électroniques tels qu'une caméra de télévision. De manière connue, cette caméra est reliée à un convertisseur analogique-numérique lui-même relié à une unité de traitement ; cette unité a notamment pour but, au cours de la période de reconnaissance, de déterminer les valeurs numériques correspondant aux coordonnées des points de la ligne de contour caractéristique de l'image de référence de chaque objet. Ces moyens de traitement permettent également de fournir des valeurs numériques correspondant à des coordonnées de points d'une ligne de contour caractéristique de l'image de l'ensemble des objets à reconnaître, au cours d'une période de reconnaissance, lorsque ces objets sont susceptibles de se chevaucher. Toutes les valeurs numériques sont bien entendu enregistrées dans une mémoire de l'unité de traitement précitée.

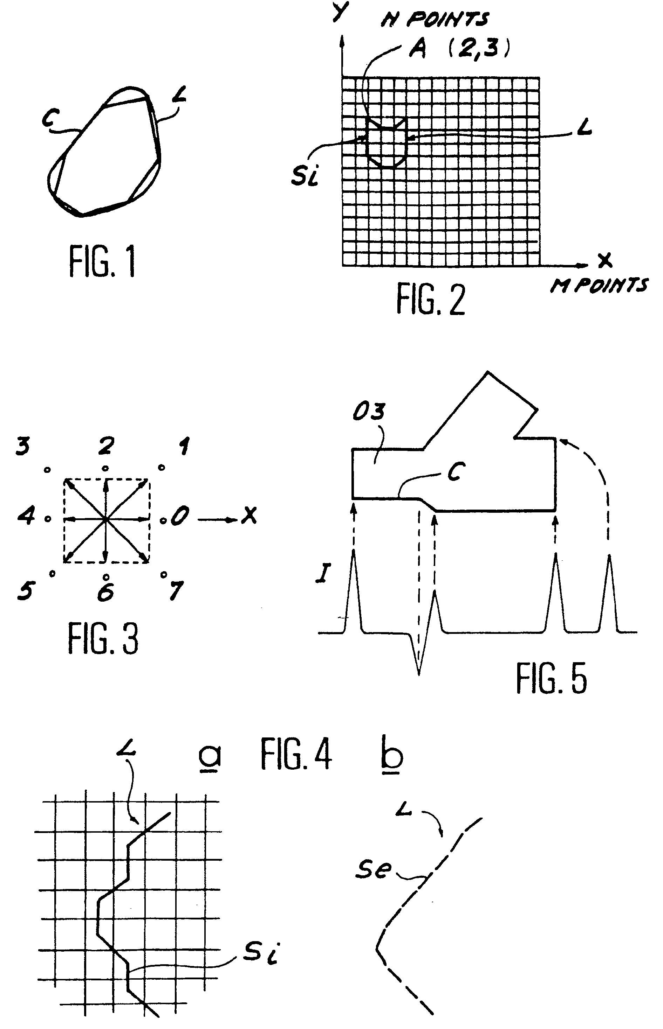

L'opération suivante consiste à définir des segments caractéristiques codés, dont les extrémités sont situées sensiblement sur chaque ligne de contour des images de référence au cours de la période d'apprentissage, et sur la ligne de contour de l'image des objets à reconnaître, au cours de la période de reconnaissance. Des segments caractéristiques C de ce type, dont les extrémités sont situées sur la ligne de contour L d'une image, sont représentés en exemple sur la figure 1. Comme on le verra plus loin en détail, chaque segment caractéristique comporte généralement une pluralité de segments élémentaires successifs alignés. Le codage de chaque segment caractéristique fournit notamment la longueur de chaque segment ainsi que son angle par rapport à une direction de référence. Ce codage est bien entendu effectué aussi bien dans une phase d'apprentissage des différents objets à reconnaître ultérieurement, que dans une phase subséquente de reconnaissance des objets susceptibles de se chevaucher.

De préférence, selon le procédé de l'invention, le codage des segments caractéristiques consiste tout d'abord à coder des segments permettant d'approcher la ligne de contour de chaque image selon une méthode dite de "codage par vecteurs de Freeman". Ce codage est ensuite suivi d'un traitement correctif qui permet d'obtenir les segments successifs élémentaires précités qui permettent de définir les segments caractéristiques de la ligne de contour L de l'image considérée.

La méthode de codage par vecteurs de Freeman sera mieux comprise à l'aide des figures 2 et 3 :

On suppose tout d'abord que le contour L de l'image considérée (image de référence d'un objet ou image de l'ensemble des objets à reconnaître) est numérisé spatialement dans une matrice présentant MxN points dans un repère de référence XY. La méthode de codage de Freeman consiste à coder des déplacements élémentaires qu'on effectue en suivant la ligne de contour L selon des segments tels que représentés sur la figure 2. Dans la représentation matricielle choisie, si l'on considère que chaque élément d'image est carré, il n'y a que huit possibilités d'orientation, selon Freeman, pour passer d'un point à un autre du contour. Ces huit possibilités sont représentées par les huit vecteurs dits vecteurs de Freeman, numérotés de 0 à 7 sur la figure 3. Ces huit vecteurs sont en fait décalés de $\frac{\pi}{4}$ dans l'exemple de représentation matricielle considérée. Les vecteurs de Freeman permettent ainsi de définir des segments orientés codés successifs, dont les extrémités sont situées sur chaque ligne de contour. Les coordonnées de ces extrémités sont bien entendu connues à partir des coordonnées des points de chaque ligne de contour.

Dans l'exemple du contour segmenté L de la figure 2, si le point de départ du parcours de ce contour, est le point A, de coordonnées 2, 3, dans la matrice choisie, la chaîne de Freeman associée au contour L peut être exprimée en fonction des numéros de vecteurs de la figure 3 de la façon suivante :

$$7, 0, 1, 6, 6, 6, 5, 4, 3, 2, 2, 2.$$

Ce codage est particulièrement intéressant car il fait apparaître l'orientation des segments de la ligne de contour, par rapport à la direction de référence X.

Le codage d'une ligne de contour d'une image par vecteurs de Freeman entraîne des imprécisions dans la représentation approchée du contour par des segments codés. En effet, les vecteurs de Freeman sont inscrits dans un carré, comme représenté sur la figure 3, ou dans un rectangle ; et il en résulte que les vecteurs de Freeman perpendiculaires aux côtés du carré ou du rectangle, ainsi que les vecteurs situés dans les diagonales de ce carré ou de ce rectangle ne présentent pas tous la même longueur. Le codage de Freeman est décrit en exemple dans la demande de brevet français n° 8304447 déposée le 31 janvier 1983, au nom du même demandeur.

On sait que le codage de Freeman décompose une ligne de contour en une succession de vecteurs élémentaires dont la direction est codée sur trois bits. Ce codage est très intéressant par sa concision, mais présente aussi des inconvénients :

— un bruit de digitalisation important car l'orientation sur 360° est codée sur trois bits,

— les longueurs réelles représentées par les codes sont irrégulières, comme indiqué plus haut,

— les orientations représentées par les codes ne sont pas isotropes dans le cas ou les pixels sont rectangulaires.

Ces défauts sont inadmissibles pour la reconnaissance d'objets se recouvrant car ils conduisent à une erreur dans la représentation codée des contours et induisent des directions privilégiées. Cette anisotropie est d'autant plus gênante dans la phase de reconnaissance qu'une partie des informations est déjà dégradée par le chevauchement des objets. Le codage de Freeman présente cependant un intérêt essentiel. Il permet d'obtenir une représentation du contour précise et invariante, en translation et en rotation. Cette notion d'invariance en translation et en rotation est bien connue dans l'état de la technique. Elle est notamment décrite dans la demande de brevet précité.

Selon l'invention, pour remédier aux imprécisions du codage de Freeman, on effectue un traitement correctif permettant de déduire, à partir de chaque segment codé selon Freeman, un ou plusieurs segments élémentaires successifs dont les extrémités sont situées sensiblement sur la ligne de contour de l'image, ces segments élémentaires étant alors isotropes et de longueurs égales.

Le traitement correctif du contour codé selon Freeman, est effectue de manière préférentielle, dans l'invention, de la façon suivante :

— on effectue tout d'abord une différentiation de chaque segment codé, par rapport à son numéro d'ordre. Le principe de cette différentiation est le suivant : soit $F(n)$ le code de Freeman qui est un entier compris entre 0 et 7 ; n est l'ordre du segment de contour associé à ce code ; soit $\emptyset d(F(i), F(j))$ une fonction de différentiation correspondant à la variation réelle d'orientation entre deux codes $F(i)$ et $F(j)$, et soit C une constante permettant la normalisation d'amplitude, ce traitement peut être représenté par : $Fd(n) = C\emptyset d(F(n + 1),F(n))$, ou $Fd(n)$ sont les codes générés par ce traitement ;

– on effectue ensuite une conversion de ces données correspondant à une normalisation d'abscisses des segments codés. Cette normalisation d'abscisses est effectuée de le manière suivante : si un code Freeman F(n) représente une longueur réelle P(F(n)), cette étape transforme Fd(n) en une forme pseudo-continue Fd(p), l'entier n et le réel p obéissant à la relation suivante :

$$\sum_{i=0}^{n-1} P(F(j)) \leqslant P \leqslant \sum_{i=0}^{n} P(F(j))$$

– on effectue ensuite un filtrage numérique sur les signaux résultant de la conversion précédente. Ce filtrage est effectué de la manière suivante : pour diminuer le bruit de digitalisation, on utilise un filtre passe-bas dont la réponse impulsionnelle est M(p). Le filtrage est simulé par une convolution temporelle: G(p) = Fd(p)⊘M(p), ou G(p) est le signal filtré ;

– enfin, le signal filtré est échantillonné. Un échantillonnage à intervalle régulier Po sur G(p) le transforme en G(kPo), qui peut être noté G(k). L'intervalle Po est déterminé en fonction de la fréquence de coupure Fc du filtre passe-bas pour satisfaire le critère de Nyquist, mais il reste limité par la résolution de l'image d'une part, et par la rapidité de traitement exigée d'autre part. Le code G(k) représente une variation moyenne d'orientation du contour sur un voisinage dont la taille dépend principalement de la fréquence de coupure du filtre passe-bas. Le signe de G(k) indique la convexité ou la concavité du contour. Ces caractéristiques sont très intéressantes car elles préparent et améliorent la segmentation,

– la segmentation est suivie d'une intégration du signal échantillonné, cette intégration permet d'obtenir les segments élémentaires successifs à partir desquels, selon le procédé de l'invention, vont être déterminés, dans la phase d'apprentissage et dans la phase de reconnaissance, des vecteurs de transition qui seront définis plus loin en détail.

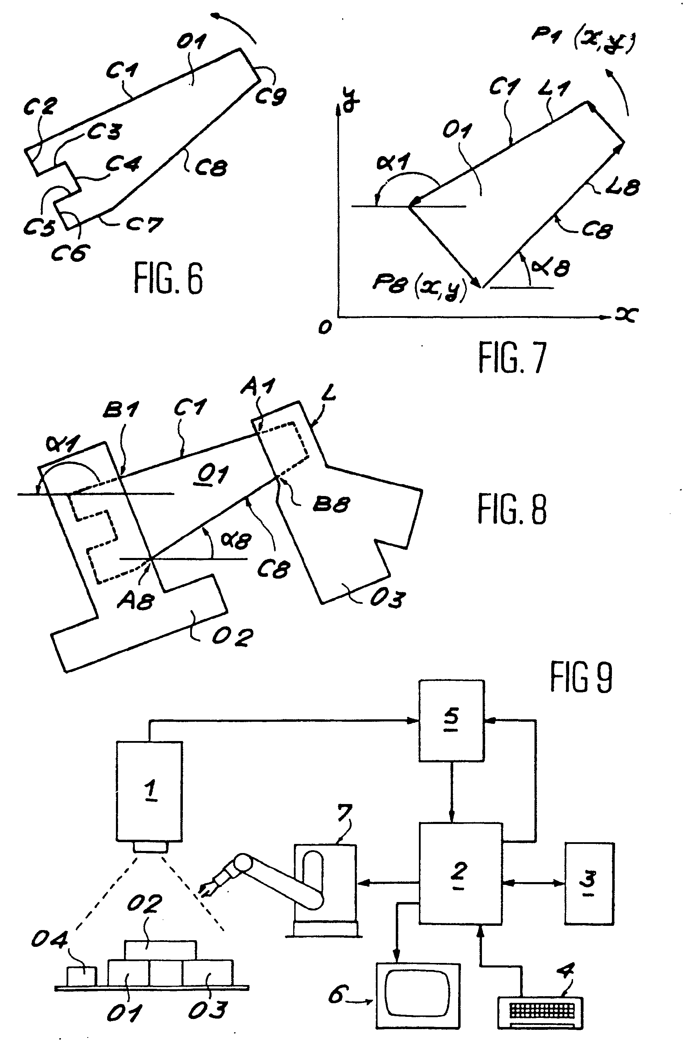

La figure 4 montre en exemple une portion d'un contour L d'une image obtenue par codage de Freeman. Cette portion est formée de segments successifs $S_l$ qui permettent d'approcher la ligne de contour de façon peu précise. Cette figure représente en (b) la même portion de contour L après le traitement indiqué plus haut et avant échantillonnage et intégration. On voit que cette portion de contour est définie par un plus grand nombre de segments $S_e$, dits segments successifs élémentaires. Le traitement décrit plus haut permet, comme on le verra plus loin en détail, de déterminer des segments dits caractéristiques groupant plusieurs segments élémentaires. En fait, le codage et le traitement qui viennent d'être décrits permettent d'approcher la ligne de contour par le plus grand nombre possible de segments de plus grande longueur groupant chacun plusieurs segments élémentaires. Ces segments de grande longueur sont les segments caractéristiques mentionnés plus haut. Ce codage et ce traitement permettent également d'obtenir un paramètre important qui est l'orientation de chaque segment caractéristique par rapport à une direction de référence.

L'opération de différentiation des segments élémentaires successifs, mentionnée plus haut, fournit en fait une succession d'impulsions. L'amplitude de chaque impulsion est beaucoup plus importante lorsque l'angle entre deux segments élémentaires successifs correspondants est important. L'opération de filtrage ne retient que les variations d'orientation moyenne importantes, comme le montre la figure 5 qui représente les signaux obtenus après dérivation et filtrage. L'échantillonnage et l'intégration qui suivent ce filtrage permettent de reconstituer une image caractéristique de l'objet $O_3$, constituée par des segments caractéristiques C, équivalents chacun à une association de plusieurs segments élémentaires. Ce sont ces segments caractéristiques qui permettent, comme on le verra plus loin en détail, de définir des vecteurs de transition.

La figure 6 représente shématiquement l'image du contour d'un objet, obtenue après le codage et le traitement mentionnés plus haut. Le contour réel de cet objet n'est pas représenté sur la figure. On a représenté simplement son contour approché après ce codage et ce traitement. Le contour ainsi obtenu est formé de segments caractéristiques C1, C2, C3,..., C8. Chacun de ces segments caractéristiques est équivalent à plusieurs segments élémentaires successifs tels que les segments $S_e$ de la figure 4(b), eux-mêmes obtenus à partir des segments successifs $S_l$ de Freeman de la figure 4(a). On suppose que le contour représenté en exemple sur cette figure est celui qui est obtenu après codage et traitement, d'une image de référence d'un objet $O_1$, pendant la phase d'apprentissage.

Le procédé de l'invention consiste à choisir un sens prédéterminé de parcours de ce contour, tel que celui qui est indiqué par la flèche sur cette figure. Le procédé consiste ensuite à choisir des couples caractéristiques de segments caractéristiques, successifs ou non de ce contour. Ces segments caractéristiques sont orientés dans le sens prédéterminé de parcours du contour. Un couple de segments caractéristiques peut être par exemple le couple de segments C1, C8. Ce pourrait être également le couple de segments C8, C9. Chaque couple de segments caractéristiques permet, comme on le verra plus loin en détail, de déterminer un vecteur de transition caractéristique.

La figure 7 permet de mieux comprendre le notion de vecteur de transition, en se référant par exemple au couple de segments caractéristiques C1, C8 de l'objet $O_1$. Les couples de segments caractéristiques d'un objet prédéterminé sont ceux qui lors de la phase de reconnaissance, des différents objets, et même en cas de chevauchement ultérieur de ces objets, vont permettre de mieux discriminer l'objet prédéterminé, tel celui dont le contour codé est représenté sur la figure 6.

On définit un vecteur de transition comme une relation entre deux segments caractéristiques d'un contour. Dans l'exemple représenté sur cette figure, le segment C8 peut être qualifié par exemple de segment d'entrée dans la zone du contour de l'image de l'objet $O_1$, tandis que le segment C1 peut être qualifié de segment de sortie de cette zone. Les portions du contour qui n'appartiennent pas aux couples de segments caractéristiques choisis sont considérées comme une partie non intéressante de la zone du contour car selon le procédé, on ne s'intéresse pas au cheminement du contour à l'intérieur de cette zone.

Un vecteur de transition pour le couple de segments caractéristiques C1, C8 est défini par les trois paramètres suivants :

– l'orientation d'entrée $\alpha_8$ qui est l'angle orienté dans le sens prédéterminé de parcours, entre l'axe de référence Ox d'un repère de référence (O, x, y), et le segment caractéristique d'entrée C8, orienté dans le sens du parcours,

– l'orientation de sortie, qui est l'angle orienté $_1$ entre l'axe de référence Ox et le segment caractéristique de sortie C1, orienté dans le sens du parcours,

– l'espace "valable". Cet espace peut être défini par les coordonnées des points de départ $P_8(x, y)$, et par les longueurs $L_8$, $L_1$ des segments orientés C8, C1.

Un vecteur de transition est caractèristique, selon l'invention, lorsque ses paramères (orientation d'entrée, orientation de sortie, origine des segments caractéristiques du couple et longueur de ces segments) procurent un pouvoir de discrimination du contour de l'objet considéré, même lorsque dans la phase ultérieure de reconnaissance, cet objet est chevauché par un ou plusieurs autres objets.

En particulier, le différence $\alpha_d = \alpha_1 - \alpha_8$ reste valide, même en cas de chevauchement partiel de l'objet considéré par d'autres objets, comme le montre la figure 8. Cette figure montre qu'un cas de chevauchement partiel de l'objet considéré $O_1$, par deux autres objets $O_2$, $O_3$, l'espace valable est plus réduit puisque les vecteurs caractéristiques C8, C1 ont des longueurs tronquées, mais la différence $\alpha_d = \alpha_1 - \alpha_8$ reste valide. On voit bien sur cette figure l'importance des vecteurs de transition puisque, lors de la phase de reconnaissance, le vecteur de transition constitué par le couple C8, C1 de vecteurs caractéristiques, permet de reconnaître l'objet $O_1$, même si certaines parties de celui-ci sont cachées par d'autres objets environnants.

En fait, l'information essentielle concernant un vecteur de transition réside dans la différence d'orientation $\alpha_d$ entre les vecteurs caractéristiques du couple concernant ce vecteur de transition. Compte tenu de ce critère, il est possible d'arranger les paramètres des vecteurs de transition de façon hiérarchique, selon la probabilité d'apparition d'une même orientation $\alpha_d$ pour un objet considéré et pour d'autres objets environnants susceptibles de chevaucher cet objet considéré. Plus l'orientation $\alpha_d$ est particulière pour un objet, plus le vecteur de transition correspondant prend de l'importance dans le dictionnaire des paramètres des vecteurs de transition qui est constitué lors de la phase d'apprentissage des différents objets.

La hiérarchisation des vecteurs de transition est donc une phase importante du procédé de l'invention. Ces vecteurs de transition sont classés selon leur pouvoir de discrimination d'un même objet et sont aussi classés selon leur pouvoir de discrimination d'un objet par rapport à un autre. Les vecteurs de transition sont considérés comme les identificateurs les plus significatifs d'un objet. Ces vecteurs sont hiérarchiquement arrangés selon les critères mentionnés plus haut : la quantité d'informations, la probabilité de disparition et de fausse génération, en cas de chevauchement.

Selon le procédé de l'invention, on traite également l'interaction entre les vecteurs de transition d'un nouvel objet dont il faut "apprendre" le contour, et les vecteurs de transition des objets dont les contours ont déjà été "appris". Pour un nouvel objet, la manière d'enregistrer et de classer les vecteurs de transition dépend de celle des objets existants. Les vecteurs de transition des objets existants doivent être réarrangés selon ceux du nouvel objet. Il se peut qu'un vecteur de transition considéré initialement comme pertinent perde beaucoup de sa valeur d'importance au fur et à mesure de l'apprentissage. Dans ce cas, le premier groupe d'informations du dictionnaire que l'on constitue pendant la phase d'apprentissage, permet de calculer un nouveau vecteur de transition pour remplacer un vecteur de transition déjà enregistré et qui est moins pertinent.

Les opérations qui viennent d'être décrites pour la phase d'apprentissage sont également effectuées lors de la phase de reconnaissance du contour des différents objets se chevauchant. On effectue la même opération de détermination des vecteurs de transition dans des segments caractéristiques du contour de l'image des objets à reconnaître.

Pendant la phase de reconnaissance, on effectue une comparaison, dans l'ordre de hiérarchisation, entre les valeurs des paramètres des vecteurs de transition du contour de l'image des objets à reconnaître et les valeurs des paramètres des vecteurs de transition du contour de l'image de référence de chaque objet, de manière à rechercher des similarités de valeurs de ces paramètres. Cette comparaison est une analyse préliminaire qui va être suivie, comme on le verra plus loin en détail, d'une vérification fine.

Le but de l'analyse préliminaire est de générer le plus rapidement possible des hypothèses sur la présence des objets, ainsi que sur leurs orientations. Ces hypothèses sont bien entendu émises à partir de la reconnaissance dans le contour de l'image de l'objet à reconnaître, de vecteurs de transition de certains objets.

Le procédé de l'invention recherche tout d'abord une similarité entre les premiers vecteurs de transmition de chaque objet du dictionnaire et un vecteur de transition du contour de l'image des objets à reconnaître. Si aucune coïncidence n'est trouvée, le procédé consiste à rechercher des coïncidences avec les deuxièmes vecteurs de transition de chaque objet du dictionnaire, et ainsi de suite.

Lorsqu'une coïncidence est trouvée entre des vecteurs de transition du contour d'une image d'un objet de référence et des vecteurs de transition du contour de l'image des objets à reconnaître, on procède alors à une vérification fine de l'hypothèse de présence de l'objet partiellement reconnu. Cette vérification fine consiste à comparer les segments élémentaires successifs du contour de l'image de référence de l'objet partiellement reconnu à partir des vecteurs de transition, avec les segments élémentaires successifs du contour de l'image des objets à reconnaître.

La vérification fine consiste en fait à rechercher s'il y a superposition du contour (défini par les segments élémentaires) de l'image de l'objet de référence, selon son orientation indiquée par le vecteur de transition trouvé, avec une partie du contour de l'image de cet objet, retrouvé dans le contour de l'image des objets à reconnaître.

Trois conditions sont nécessaires pour conclure à la présence d'un objet : il est tout d'abord nécessaire de vérifier qu'aucun segment de l'objet présumé reconnu ne se trouve hors de la silhouette des objets à reconnaître, la deuxième condition est que le rapport du périmètre identifié de l'objet dans le contour de l'image des objets à reconnaître, au périmètre de cet objet (dans le contour de référence), est supérieur à un seuil prédéterminé. Cette vérification est possible puisque les longueurs de tous les segments élémentaires du contour de l'image de l'objet de référence sont connues et que l'on connaît également les longueurs des segments élémentaires de cet objet partiellement reconnu dans l'image du contour des objets à reconnaître.

On vérifie également que le rapport de la somme des valeurs absolues des angles correspondant aux points anguleux identifiés dans le contour de l'image des objets à reconnaître, à la somme totale des valeurs absolues des angles correspondant aux points anguleux contenus dans le contour de l'image de référence de cet objet, est supérieur à un autre seuil prédéterminé. Lorsque ces trois conditions sont réunies, le procédé de l'invention permet d'affirmer que l'objet considéré est reconnu parmi tous les autres objets qui éventuellement le chevauchent partiellement.

Après cette étape, s'il reste des vecteurs de transition ou des segments du contour à analyser, qui ne font pas partie du contour de l'objet déjà reconnu, on procède aux mêmes opérations, pour un autre objet dont on pense avoir reconnu un ou plusieurs vecteurs de transition.

Sur la figure 8 par exemple, lors de la phase de reconnaissance, on compare pour le contour L de l'image des objets à reconnaître, le vecteur de transition correspondant au couple de segments A8, B8 et A1, B1, avec le vecteur de transition correspondant au couple de segments C8, C1 de l'objet $O_1$ (partiellement occultés par chevauchement lors de la reconnaisance). Il est évident que dans l'exemple représenté sur cette figure, une similarité de vecteurs de transition est détectée.

L'étape suivante consiste à effectuer une comparaison plus fine entre les segments élémentaires successifs $S_e$ (voir figure 4b) constituant les segments A8, B8 et C8 et les segments A1, B1 et C1.

Le procédé qui vient d'être décrit permet de reconnaître des objets isolés, partiellement cachés par chevauchement, par référence à un dictionnaire de formes, constitué au cours de la phase d'apprentissage. Le temps de reconnaissance varie suivant la nature de la scène à analyser. Si on utilise un microprocesseur 16 bits à usage général, un objet isolé est reconnu en moins d'une seconde tandis qu'une scène constituée de plusieurs objets qui se chevauchent est analysée en deux à cinq secondes. Ce procédé présente une fiabilité très satisfaisante car le traitement de contour qui utilise des vecteurs de transition, tient compte essentiellement des disparités entre les objets.

Lorsqu'un objet a été reconnu, on cherche à reconnaître les autres objets présents dans le scène. Pour cela on masque toutes les informations concernant les segments de cet objet reconnus dans la scène.

La figure 9 représente schématiquement un système permettant de mettre en oeuvre le procédé de l'invention. Ce système comprend par exemple une caméra vidéo 1 qui transmet vers un ensemble de traitement et pendant la phase d'apprentissage des signaux vidéo relatifs aux contours des images de référence de différents objets. Cette caméra transmet pendant la phase de reconnaissance des signaux vidéo relatifs au contour de l'image des objets $O_1$, $O_2$, $O_3$, $O_4$ à reconnaître.

Les moyens de traitement comportent un calculateur 2 relié à une mémoire 3 dans laquelle sont enregistrés un programme de traitement ainsi que les valeurs numériques à traiter ou les valeurs numériques traitées qui correspondent aux contours des images de référence ou au contour de l'image des objets à reconnaître. Le calculateur 2 peut être muni d'un clavier de commande 4. Ce calculateur commande un ensemble de numérisation et de mémorisation 5 des signaux reçus de la caméra. Le calculateur 2 reçoit les signaux de sortie de cet ensemble 5 et effectue la totalité du traitement précédemment décrit. Un appareil de visualisation 6 permet par exemple d'afficher le contour de l'image de référence de chaque objet lors de la phase d'apprentissage, ou le contour de l'image des objets à reconnaître, lors de la phase de reconnaissance. Le calculateur 2 peut commander par une sortie, un robot 7 venant par exemple saisir un objet reconnu si cela est nécessaire.

Dans une variante de l'invention, l'ensemble 5 réalise de plus une partie du traitement des signaux reçus de le caméra. Ce traitement comprend les opérations d'extraction du contour, de codage par vecteurs de Freeman, de différentiation, de conversion numérique-analogique, de filtrage, d'échantillonnage et d'intégration mentionnées plus haut. Le calculateur reçoit les signaux de sortie de cet ensemble de traitement 5 et recherche les segments caractéristiques à partir des segments élémentaires successifs déterminés par l'ensemble de traitement 5 ; il calcule les vecteurs de transition.

## Revendications

1. Procédé de reconnaissance automatique d'objets susceptibles de se chevaucher, à partir des images respectives de référence de ces objets et de l'image de l'ensemble des objets à reconnaître, ces images étant mémorisées sous forme de valeurs numériques représentant pour chaque image les coordonnées des points d'une ligne de contour (L) de cette image, dans un repère de référence, ce procédé consistant à coder, pour chaque image, des segments élémentaires successifs $(S_e)$ dont les extrémités sont situées sensiblement sur la ligne de contour correspondante, ce codage donnant pour chaque segment, la longueur $(L_1$ ou $L_8)$ de ce segment, ainsi que son angle $(\alpha_1$ ou $\alpha_8)$ par rapport à une direction de référence (Ox), cette opération de codage étant effectuée aussi bien dans une phase "d'apprentissage" des différents objets à reconnaître ultérieurement, que dans une phase subséquente de "reconnaissance" des objets susceptibles de se chevaucher, ce procédé consistant dans la phase d'apprentissage :

– à rechercher pour chaque contour d'image de référence, des couples de segments (C1, C8) caractéristiques successifs ou non de ce parcours, formés chacun d'un ou plusieurs segments élémentaires $(S_e)$, ces segments caractéristiques étant orientés dans un sens prédéterminé de parcours du contour, chaque couple déterminant un vecteur de transition caractéristique défini par des paramètres qui sont la valeur de l'angle $(\alpha_d)$, orienté dans le sens du parcours, entre les deux segments caractéristiques orientés du couple, les coordonnées (P(x, y)) de l'origine et la longueur de chaque segment $(L_1, L_8)$ caractéristique du couple, un vecteur de transition étant caractéristique lorsque ses paramètres procurent un pouvoir de discrimination du contour de l'objet correspondant, même en cas de chevauchement de cet objet par un ou plusieurs autres objets, les paramètres des vecteurs de transition étant mémorisés,

– à effectuer les mêmes opérations de détermination des vecteurs de transition dans les segments caractéristiques du contour de l'image des objets à reconnaître,

– à comparer les valeurs des paramètres des vecteurs de transition du contour de l'image des objets à reconnaître et du contour des images de référence de chaque objet, de manière à rechercher des similarités de valeurs de ces paramètres,

caractérisé en ce qu'il consiste en outre :

– à hiérarchiser les vecteurs de transition d'un contour en fonction de leur pouvoir de discrimination, pour l'image des objets à reconnaître et pour les images de référence,

– à modifier cette hiérarchisation des vecteurs de transition au fur et à mesure de l'acquisition des vecteurs de transition des contours des différents objets, de manière à éliminer les vecteurs de transition semblables pour les différents contours,

ce procédé consistant ensuite, dans la phase de reconnaissance :

– à faire une hypothèse de présence d'un objet correspondant à un vecteur de transition pour lequel la comparaison a établi une similarité,

– à établir une vérification fine de cette hypothèse en comparant les segments élémentaires $(S_e)$ successifs du contour de l'image de référence de cet objet avec les segments élémentaires successifs du contour de l'image des objets a reconnaître.

2. Procédé selon la revendication 1, caractérisé en ce que les segments élémentaires successifs $(S_e)$ codés sont obtenus par un codage de Freeman permettant d'obtenir des segments successifs $(S_i)$ définis par leurs orientations et dont les extrémités sont situées sur la ligne de contour (L) de chaque image, ce codage de Freeman étant suivi d'un traitement correctif permettant de déduire à partir de chaque segment $(S_e)$ codé selon Freeman, un ou plusieurs segments élémentaires successifs $(S_e)$ dont les extrémités sont situées sur la ligne de contour (L) de l'image, ces segments élémentaires successifs étant isotropes et de longueurs égales.

3. Procédé selon la revendication 2, caractérisé en ce que le traitement correctif consiste pour chaque segment (S₁) codé selon Freeman, à différentier ce segment par rapport à son numéro d'ordre dans le contour afin de compenser les irrégularités d'orientation, à effectuer une conversion des valeurs résultant de la différentiation de chaque segment afin de compenser les irrégularités de longueur, à filtrer le signal résultant de cette conversion, à échantillonner ce signal à fréquence constante, puis à intégrer le signal échantillonné, cette intégration produisant lesdits segments élémentaires (Sₑ) successifs codés, le traitement correctif précédent permettant par ailleurs d'extraire les points anguleux, donc les segments caractéristiques.

**Patentansprüche**

1. Verfahren zur automatischen Erkennung von Gegenständen, die einander überlappen können, aufgrund der jeweiligen Bezugsbilder dieser Gegenstände und dem Bild der Gesamtanordnung der zu erkennenden Gegenstände, wobei diese Bilder in Form von Zahlenwerten gespeichert sind, die für jedes Bild die Koordinaten der Punkte der Umrißlinie (L) dieses Bildes in einem Bezugsraster darstellen, wobei dieses Verfahren darin besteht, für jedes Bild aufeinanderfolgende Elementarabschnitte (Se) zu kodieren, deren Enden im wesentlichen auf der entsprechenden Umrißlinie liegen, wobei diese Kodierung für jeden Abschnitt die Länge (L₁ oder L₈) dieses Abschnittes, sowie dessen Winkel (α₁ oder α₈) relativ zu einer Bezugsrichtung (Ox) liefert und wobei dieser Kodierungsschritt sowohl in einer Phase zur "Erlernung" der verschiedenen, später zu erkennenden Gegenstände ausgeführt wird, als auch in einer nachfolgenden Phase der "Erkennung" der einander überlappen könnenden Gegenstände, wobei dieses Verfahren darin besteht, in der Erkennungsphase

– für jeden Umriß eines Bezugsbildes aufeinander folgende oder nicht aufeinander folgende, für diesen durchlaufenen Weg charakteristische Folgen von Abschnitten (C1, C8) zu suchen, von denen jede aus einem oder mehreren Elementarabschnitten (Se) besteht und diese charakteristischen Abschnitte in einer vorgegebenen Durchlaufrichtung des Umrisses angeordnet sind, wobei jede Folge einen charakteristischen Übergangsvektor bestimmt, der durch die Parameter Wert des Winkels (αd) in Durchlaufrichtung zwischen den beiden gerichteten charakteristischen Abschnitten der Folge, Koordinaten (P(x, y)) des Anfangspunktes und Länge jedes charakteristischen Segmentes (L₁, L₈) der Folge definiert ist, ein Übergangsvektor charakteristisch ist, wenn seine Parameter ein Mittel zur Unterscheidung des Umrisses des entsprechenden Gegenstandes sogar im Falle der Überlappung dieses Gegenstandes durch einen oder mehrere andere Gegenstände darstellen und die Parameter der Übergangsvektoren gespeichert werden,

– dieselben Schritte zur Bestimmung der Übergangsvektoren in den charakteristischen beschnitten des Umrisses des Bildes der zu erkennenden Gegenstände auszuführen,

– die Werte der Parameter der Übergangsvektoren des Umrisses des Bildes der zu erkennenden Gegenstände und des Umrisses der Bezugsbilder jedes Gegenstandes zu vergleichen, um Ähnlichkeiten von Werten dieser Parameter zu suchen,

dadurch gekennzeichnet, daß es außerdem darin besteht,

– für das Bild der zu erkennenden Gegenstände und für die Bezugsbilder die Übergangsvektoren eines Umrisses nach ihrer Unterscheidungskraft in einer Rangordnung zu ordnen,

– diese Rangordnung der Übergangsvektoren je nach der Gewinnung der Übergangsvektoren der Umrisse der verschiedenen Gegenstände derart zu ändern, daß die bei verschiedenen Umrissen ähnlichen Übergangsvektoren ausgeschieden werden,

und daß dieses Verfahren anschließend, in der Erkennungsphase, darin besteht

– eine Hypothese über die Anwesenheit eines einem Übergangsvektor, für den der Vergleich eine Ähnlichkeit ergeben hat, entsprechenden Gegenstandes aufzustellen,

– diese Hypothese durch Vergleich der aufeinanderfolgenden Elementarabschnitte (Sₑ) des Umrisses des Bezugsbildes dieses Gegenstandes mit den aufeinanderfolgenden Elementarabschnitten des Umrisses des Bildes der zu erkennenden Gegenstäde detailliert nachzuprüfen.

2. Verfahren nach Patentanspruch 1, dadurch gekennzeichnet, daß die kodierten, aufeinanderfolgenden Elementarabschnitte (Sₑ) durch eine Freeman-Kodierung erhalten werden, die es ermöglicht, durch ihre Richtungen definierten, aufeinanderfolgende Abschnitte (S₁) zu erhalten, deren Enden auf der Umrißlinie (L) jedes Bildes liegen, wobei auf diese Freeman-Kodierung eine Korrekturbearbeitung folgt, die es erlaubt, aus jedem nach Freeman kodierten Segment (S₁) ein oder mehrere aufeinanderfolgende Elementarabschnitte (Sₑ) abzuleiten, deren Enden auf der Umrißlinie (L) des Bildes liegen, wobei diese aufeinanderfolgenden Elementarabschnitte isotrop und gleich lang sind.

3. Verfahren nach Patentanspruch 2, dadurch gekennzeichnet, daß die Korrekturbearbeitung darin besteht, für jeden nach Freeman kodierten Abschnitt (S₁) darin, diesen Abschnitt nach seiner Nummer der Reihenfolge im Umriß zu differenzieren, um die Unregelmäßigkeiten der Richtung zu kompensieren, die aus der Differentiation jedes Abschnittes sich ergebenden Werte zu konvertieren, um die Unregelmäßigkeiten der Länge zu kompensieren, das sich aus dieser Konvertieruang ergebende Signal zu filtern, dieses Signal bei konstanter Frequenz in Abschnitte zu zerlegen und dann das in Abschnitte zerlegte Signal zu integrieren, wobei diese Integration die genannten kodierten, aufeinanderfolgenden Elementar abschnitte (S$_e$) erzeugt und die obige Korrekturbehandlung außerdem erlaubt, die Eckpunkte, also die charakteristischen Abschnitte, auszusondern.

## Claims

1. Process for the automatic recognition of objects liable to overlap, on the basis of respective reference images of said objects, and the image of the group of objects to be recognised, said images being stored in the form of digital values representing for each image the coordinates of the points of a contour line of said image, in a reference mark, said process consisting of coding, for each image, successive elementary segments, whereof the ends are substantially located on the corresponding contour line, so that for each segment, said coding gives the length of said segment, as well as its angle with respect to a reference direction, said coding operation being performed both during the "learning" phase of the different objects to be subsequently recognised and in a subsequent "recognition" phase of the objects liable to overlap, said process comprising in the learning phase : investigating for each reference image contour, pairs of successive or non-successive characteristic segments of said path, each formed from one or more elementary segments (S$_e$) said characteristic segments being oriented in a predetermined direction of the contour path, each pair determining a characteristic transition vector defined by parameters which are the value of the angle (a$_d$), oriented in the direction of the path, between the two oriented characteristic segments of the pair, the coordinates (P(x, y)) of the origin and the length of each characterristic segment (L$_1$, L$_8$) of the pair, a transition vector being characteristic when its parameters bring about a discriminating power of the contour of the corresponding object, even when said object is overlapped by one or more other objects, the parameters of the transition vectors being stored,

carrying out the same operations of determining transition vectors in the characteristic segments of the contour of the image of the objects to be recognised,

comparing the values of the parameters of the transition vectors with the contour of the image of the objects to be recognized and the contour of the reference images of each object, in such a way as to seek similarities between the values of these parameters,

hierarchizing the transition vectors of a contour as a function of their discriminating power for the image of the objects to be recognized and for the reference images,

modifying said hierarchization of the transition vectors during the acquisition of the transition vectors of the contours of the different objects, so as to eliminate similar transition vectors for the different contours,

said process then consisting, in the recognition phase : making a presence hypothesis of an object corresponding to a transition vector for which the comparison has established a similarity and establishing a fine verification of this hypothesis by comparing successive elementary segments S$_e$ of the contour of the reference image of said object with successive elementary segments of the contour of the image of the objects to be recognised.

2. Process according to claim 1, characterized in that the successive elementary coded segments (S$_e$) are obtained by Freeman coding making it possible to obtain successive segments (S$_l$) defined by their orientations and whose ends are located on the contour line (L) of each image, said Freeman coding being followed by a corrective processing making it possible to deduce on the basis of each freeman-coded segment (S$_l$), one or more successive elementary segments (S$_e$), whereof the ends are located on the contour line (L) of the image, said successive elementary segments being isotropic and of the same length.

3. Process according to claim 2, characterized in that the corrective processing consists, for each Freeman-coded segment (S$_l$), of differentiating said segments with respect to its order number in the contour, in order to compensate orientation irregularities, performing a conversion of the values resulting from the differentiation of each segment in order to compensate length irregularities, filtering the signal resulting from said conversion, sampling said signal at a constant frequency and then integrating the sampled signal, said integration producing said successive elementary coded segments (S$_e$), the preceding corrective processing also making it possible to extract the angular points, i.e. the characteristic segments.

FIG. 1

FIG. 2

FIG. 3

FIG. 5

FIG. 4

a      b

FIG. 6

FIG. 7

FIG. 8

FIG 9